# EUROPÄISCHE PATENTSCHRIFT

(11) **EP 2 832 224 B1**
(45) Veröffentlichungstag und Bekanntmachung des Hinweises auf die Patenterteilung: **27.12.2017**
(21) Anmeldenummer: 13178874.7
(22) Anmeldetag: 01.08.2013
(51) Int. Cl.: A21C 15/00

(54) **Backware sowie Verfahren zur Herstellung einer Backware**
Bakery product and method for preparing a baked product
Produit cuit et procédé destiné à la fabrication d'un produit cuit

(43) Veröffentlichungstag der Anmeldung: 04.02.2015
(73) Patentinhaber: Griesson - de Beukelaer GmbH & Co. KG, 56751 Polch (DE)
(72) Erfinder: Schnell, Anja, 56220 Sankt Sebastian (DE); Dr. Fabian, Jürgen Heinz, 56332 Dieblich (DE); Otten, Lena, 56068 Koblenz (DE)
(74) Vertreter: Dr. Stark & Partner Patentanwälte mbB

(56) Entgegenhaltungen:
- EP-A2- 0 057 458
- FR-A1- 2 535 680
- GB-A- 2 048 756
- Joy of Baking: "Shortbread Cookies Recipe Demonstration - Joyofbaking.com", YouTube, 9 February 2011 (2011-02-09), pages 1-1, XP054976614, Retrieved from the Internet: URL:https://www.youtube.com/watch?v=G1YcaJ F8q3I [retrieved on 2016-06-21]

## Beschreibung

Die Erfindung betrifft ein Verfahren zur Herstellung einer Backware, die ein Gebäckteil mit einer Unterseite, die durch zumindest eine, vorzugsweise wenigstens im Wesentlichen plane, Oberfläche gebildet ist, mit einer Oberseite, die durch zumindest eine, vorzugsweise wenigstens im Wesentlichen plane, Oberfläche gebildet ist, und mit zumindest einer die Oberseite und die Unterseite miteinander verbindenden Seitenfläche umfasst, wobei ein Teilbereich der Unterseite des Gebäckteils mit einer Beschichtung versehen wird.
Das Gebäckteil weist dabei in einer gedachten Längsrichtung eine Längserstreckung auf, wobei hierunter insbesondere die Erstreckung des Gebäckteils verstanden wird, die orthogonal zum generellen Verlauf des nach dem Beschichten gebildeten generellen Übergangs vom unbeschichteten zweiten Teilbereich zum beschichteten ersten Teilbereich ausgerichtet ist. Ansonsten ist diejenige Erstreckung des Gebäckteils gemeint, welche zwischen dem Ende, das beschichtet wird, und dem Ende, welches einen unbeschichtet verbleibenden Bereich aufweist, verläuft und ggf. parallel zu zumindest einer annähernd derart verlaufenden Seitenkante des Gebäckteils ausgerichtet ist.

Dabei wird ein Endbereich dieser Längserstreckung mit der Beschichtung versehen. Das Gebäckteil weist ferner eine Breite auf, die orthogonal zur Längserstreckung verläuft. Aus der GB 2 048 756 A ist eine Form und ein Verfahren zur Herstellung einer Süßware bekannt. Die EP 0 057 458 A2 beschreibt ein Verfahren und eine Anlage zum Herstellen von Backwerk.

Das Video "Shortbread Cookies Recipe Demonstration - Joyofbaking.com", YouTube, 9. Februar 2011 (2011-02-09), gefunden im Internet, URL: https://www.youtube.com/watch? v=G1YcaJF8q3I

Es sind Verfahren zur Beschichtung von Gebäckteilen durch Eintauchen bekannt. Das zu beschichtende Gebäckteil wird beispielsweise in ein Bad aus flüssiger Schokolade durch eine im Wesentlichen senkrechte Bewegung eingetaucht und anschließend herausgezogen. Damit ist nur ein allseitiges Beschichten des Gebäckteils mit Ausnahme des Griffbereichs möglich. Es schließt sich ein Kühlschritt an. Nachteilig ist, dass nach dem Herausziehen aus dem Bad die Beschichtung bis zu dem Zeitpunkt, an dem sie zumindest an der Oberfläche ausgehärtet ist, nachtropfen kann. Sofern die Backware ein Oberflächenrelief aufweisen soll, muss dieses in das Gebäckteil eingebracht werden. Aufgrund des Eintauchens in die Beschichtungsmasse können Konturen des in das Gebäckteil eingebrachten Oberflächenreliefs unscharf werden.
Aufgabe der Erfindung ist es, die vorgenannten Nachteile zu vermeiden und ein Verfahren anzugeben, das eine Beschichtung nur eines Teilbereichs der Unterseite, der sich über die komplette Breite der Unterseite erstreckt, erlaubt.

Diese Aufgabe wird durch ein Verfahren gemäß Anspruch 1 gelöst. Sofern das Gebäckteil rechteckig ausgebildet ist, weist das Gebäckteil insgesamt vier Seitenflächen auf. Bei einer runden Ausgestaltung ist nur eine Seitenfläche vorgesehen.
Durch das schräge Aufliegen wird die Bildung von dünnen Beschichtungsbereichen, die jenseits einer eigentlich gewollten Grenze liegen und auch "Schwimmhäute" genannt werden, reduziert bzw. sogar vermieden.
Sofern die Oberfläche der Unterseite durch wenigstens zwei Oberflächen gebildet ist, kann für die Betrachtung von Ausrichtung und Winkeln die theoretische Linie oder Ebene durch den Auflagepunkt bzw. die Auflagelinie der Unterseite auf dem Auflagebereich einerseits und durch den tiefsten Punkt bzw. die tiefste Linie bzw. die Mitte des tiefsten Bereichs in Längsrichtung der Unterseite andererseits anstelle von "Unterseite" verwendet werden.
Unter der "ursprünglichen Oberfläche des Bades" wird die Oberfläche des Bades vor dem Eintauchen des Gebäckteils verstanden. Sofern als Beschichtungsmasse eine Flüssigkeit eingesetzt wird, verläuft die ursprüngliche Oberfläche des Bades horizontal. Diese Flüssigkeit kann beispielsweise flüssige Schokolade sein.

Als Eintauchen wird der Prozess verstanden, bei dem das Gebäckteil bei in Kontakt kommen mit der Oberfläche des Bades aufgrund seines Gewichtes leicht in die Beschichtungsmasse einsinkt. Auch kann ein gezieltes Eindrücken erfolgen. Dadurch steigt der Spiegel der Beschichtungsmasse infolge der Verdrängung der Beschichtungsmasse durch das teilweise einsinkende Gebäckteil an, so dass der zu beschichtende Teilbereich beschichtet wird.

Das erfindungsgemäße Verfahren erlaubt eine Beschichtung der Unterseite nur in dem ersten Teilbereich, der sich über die komplette Breite des Gebäckteils erstreckt. Ferner weist das Gebäckteil einen Griffbereich auf, der sowohl auf der Unterseite als auch auf der Oberseite unbeschichtet ist, so dass daran die Backware mit zwei Fingern ergriffen werden kann, ohne dass die Finger mit der Beschichtung in Kontakt kommen.

Dieser Griffbereich kann über die gesamte Breite des Gebäckteils reichen, er kann aber auch nur in einem Teilbereich, seitlich oder zu den beiden seitlichen Seitenflächen beabstandet, vorgesehen sein.

Sofern der Griffbereich nicht über die gesamte Breite reicht, kann seitlich neben dem Griffbereich wenigstens ein weiterer, ebenfalls eine Beschichtung aufweisender, Bereich vorgesehen sein.

Bei einer Beschichtung, die sich nur auf dem ersten Teilbereich einer der beiden Oberflächen, beispielsweise der Unterseite befindet, kann die Backware auf jedem Untergrund, beispielsweise auch auf einer Tischdecke, auf ihrer unbeschichteten Oberfläche abgelegt werden, so dass die Beschichtung nicht an dem Untergrund haften bleibt.

Der Übergang zwischen dem unbeschichteten Teilbereich und dem beschichteten Teilbereich kann beliebig ausgebildet und positioniert werden. Sofern bei einem rechteckigen Gebäckteil ein ebenfalls rechteckiger Griffbereich beabsichtigt ist, verläuft der Übergang parallel zu wenigstens einer Seitenfläche des Gebäckteils. Sofern nur eine Ecke des viereckigen Gebäckteils einen Griffbereich bilden soll, kann der Übergang in einem Winkel ungleich 90° zu den vier Seitenflächen des Gebäckteils verlaufen. Alternativ sind aber auch gekrümmte, geschwungene oder beliebig geformte Übergänge möglich.

Bei der Unterseite des Gebäckteils muss es sich nicht um die Unterseite der später hergestellten Backware handeln. Vielmehr kann es sich bei der während des Herstellverfahrens als Unterseite bezeichneten Oberfläche auch um die spätere Oberseite der fertig hergestellten Backware handeln. Die in der Form befindliche Beschichtungsmasse stellt in ihrer Gesamtheit die später ausgehärtete Beschichtung der Backware dar.

Die Unterseite besteht vorzugsweise nur aus dem ersten Teilbereich und dem zweiten als Griffbereich ausgebildeten Teilbereich. Bei dem Gebäckteil kann es sich beispielsweise um einen Butterkeks handeln. Selbstverständlich sind auch andere geeignete Gebäckteile möglich, wie z. B. Gebäcke aus Hefefeinteigen, Mürbeteiggebäcke, Hartkekse, Waffeln, Lebkuchen, Kräcker, Laugendauergebäcke, Oblaten, Zwieback, Baiser, Biskuit, Brote, Trockenflachbrot, Knäckebrot.

Als Beschichtung bietet sich beispielsweise Vollmilchschokolade oder Zartbitterschokolade an. Selbstverständlich sind auch andere geeignete Beschichtungen denkbar, wie z. B. Schokolade, Fettglasur, Fondant/Zuckermassen, Karamell, Krokant, Gelee, Fruchtgummi/Weingummi, Käse, Aspik.

Der Winkel α liegt zwischen 1° und 20°. Vorteilhafterweise kann der Winkel α zwischen 1° und 5°, vorzugsweise bei 2°, liegen.
Das Gebäckteil kann viereckig, insbesondere rechteckig, ausgebildet sein. Bei einer rechteckigen Ausgestaltung des Gebäckteils kann der beschichtete erste Teilbereich ebenfalls rechteckig ausgebildet sein und kann bis an insgesamt drei die Unterseite begrenzende Seitenflächen heranreichen. Alternativ sind auch beliebige andere geometrische oder figürliche Formen des Gebäckteils und der Beschichtung möglich.
Das Gebäckteil kann beispielsweise eine Länge von etwa 6 cm, eine Breite von etwa 5 cm und eine Höhe von etwa 0,5 cm aufweisen, wobei die Beschichtung etwa 0,3 cm betragen kann. Es bietet sich an, wenn der Griffbereich etwa 1 bis 2 cm tief und/oder breit ist, damit die Backware gut mit zwei Fingern gegriffen werden kann, ohne dass die Finger in Kontakt mit der Beschichtung kommen.
Es sind beliebige Formen des Gebäckteils möglich. Bei einer runden Ausgestaltung des Gebäckteils kann der beschichtete erste Teilbereich nach Art eines Halbkreises oder sichelförmig ausgebildet sein und sich bis zu den gegenüberliegenden Bereichen der Seitenfläche erstrecken. Alternative Ausgestaltungen sind in beliebiger Form möglich.

Die Dicke der Beschichtung kann zumindest entlang eines Teilbereichs der Längserstreckung des ersten Teilbereichs von dem freien Ende des ersten Teilbereichs zu dem Griffbereich zunehmen. Die Dicke der Beschichtung kann zumindest entlang eines Teilbereichs der Längserstreckung des ersten Teilbereichs von dem freien Ende des ersten Teilbereichs zu dem Griffbereich abnehmen.

Alternativ kann die Dicke der Beschichtung zumindest entlang eines Teilbereichs der Längserstreckung des ersten Teilbereichs konstant sein.

Die Höhe der Beschichtungsmasse in der Form kann derart ausgebildet sein, dass das Gebäckteil durch das Eintauchen in die noch nicht ausgehärtete Beschichtungsmasse auch in zumindest einem derjenigen Bereiche von zumindest einer der Seitenflächen, die an den zu beschichtenden ersten Teilbereich angrenzen, mit einer Beschichtung versehen wird. Bei einer rechteckigen Ausgestaltung des Gebäckteils und bei einem Übergang zwischen dem unbeschichteten zweiten Teilbereich und dem beschichteten ersten Teilbereich, der parallel zu zwei Seitenflächen des Gebäckteils ausgerichtet ist, erstreckt sich damit die Beschichtung über insgesamt drei aneinander angrenzende Seitenflächen. Dabei wäre die mittlere der drei Seitenflächen über ihre komplette Länge und die beiden anderen, einander gegenüberliegenden Seitenflächen nur über einen Teil ihrer jeweiligen Länge beschichtet. In der Draufsicht auf die Backware würde die Beschichtung das Gebäckteil nach Art eines "U" teilweise umfassen. An den beiden gegenüberliegenden Seitenflächen nimmt die Höhe der Beschichtung mit zunehmendem Abstand von der mittleren Seitenfläche ab. Für die seitlich neben dem Gebäckteil befindliche Beschichtung wird die Angabe "Höhe" verwendet, wohingegen für die unterhalb des Gebäckteils befindliche Beschichtung die Angabe "Dicke" eingesetzt wird.

Das Gebäckteil kann so weit in die noch nicht ausgehärtete Beschichtungsmasse eingetaucht werden, dass die Beschichtungsmasse bei eingetauchtem Gebäckteil in dem Bereich des Gebäckteils, der beim Eintauchen am tiefsten eintaucht, in etwa bündig mit der jeweils entsprechenden Kante zwischen zumindest einer Seitenfläche und der Oberseite des Gebäckteils abschließt. Sofern das Gebäckteil rechteckig ausgebildet ist und der Übergang zwischen dem unbeschichteten zweiten Teilbereich und dem beschichteten ersten Teilbereich parallel zu zwei Seitenflächen des Gebäckteils ausgerichtet ist, ist eine Seitenfläche komplett beschichtet, während die Höhe der Beschichtung an den beiden angrenzenden, einander gegenüberliegend angeordneten Seitenflächen mit zunehmendem Abstand von der vollständig beschichteten Seitenfläche abnimmt.

Dabei verbleibt die Oberseite des Gebäckteils vollständig unbeschichtet.

Das Gebäckteil kann so weit in die noch nicht ausgehärtete Beschichtungsmasse eingetaucht werden, dass die Beschichtung auch teilweise die Oberseite des Gebäckteils überdeckt. Auf ein rechteckiges Gebäckteil bezogen, wäre damit zum einen ein Teilbereich der Unterseite und ein Teilbereich der Oberseite beschichtet. Zum anderen wäre - sofern der Übergang zwischen dem unbeschichteten zweiten Teilbereich und dem beschichteten ersten Teilbereich parallel zu zwei Seitenflächen des Gebäckteils ausgerichtet ist - eine Seitenfläche komplett beschichtet, während die Höhe der Beschichtung an den beiden angrenzenden, einander gegenüberliegend angeordneten Seitenflächen in einem Teilbereich mit zunehmendem Abstand von der vollständig beschichteten Seitenfläche abnehmen könnte.

Die Form weist einen die noch nicht ausgehärtete Beschichtungsmasse aufnehmenden Eintauchbereich mit einem Boden und einem Auflagebereich auf, wobei das Gebäckteil auf dem Auflagebereich aufliegt und durch den Auflagebereich der nicht zu beschichtende zweite Teilbereich des Gebäckteils, insbesondere dichtend, von der Beschichtungsmasse abgeschirmt wird. Der Auflagebereich stellt insoweit eine Barriere dar, vor der sich die Beschichtungsmasse aufstaut. Das Gebäckteil ist so auf dem Auflagebereich ausgerichtet, dass es mit seinem zu beschichtenden ersten Teilbereich in die Beschichtungsmasse einsinkt.

Die Form kann vorzugsweise im Auflagebereich zumindest zwei im Abstand zueinander angeordnete Fixierelemente aufweisen, welche das Gebäckteil seitlich beim Eintauchen fixieren. Auch kann lediglich ein Fixierelement, vorzugsweise im Auflagebereich, vorgesehen sein.

Die der Beschichtungsmasse zugewandte Kante des Auflagebereichs ist vorzugsweise zur Erzielung einer guten Abdichtung scharfkantig oder als dünne Kante ausgebildet. Sie kann aber auch leicht abgerundet ausgebildet sein, wobei der Radius der Abrundung vorzugsweise zwischen 0,1 und 0,5 mm liegt.

Der Auflagebereich kann als über die gesamte Breite der Form verlaufender und sich wenigstens ungefähr vertikal aufwärts erstreckender Steg ausgebildet sein. Hierbei kann es sich beispielsweise um einen Blech- oder Kunststoffstreifen handeln.

Der Auflagebereich kann als flächige und insbesondere sich über das freie Ende des Gebäckteils hinauserstreckende Auflagefläche ausgebildet sein.

Die Oberfläche des Auflagebereichs kann in einem Winkel α", der zwischen 1° und 20°, vorzugsweise 2°, beträgt, zur Oberfläche der Beschichtungsmasse vor dem Eintauchen des Gebäckstückes ausgerichtet sein.

Der Boden des Eintauchbereichs kann in einem Winkel α', der zwischen 0° und 20°, vorzugsweise 2°, beträgt, zur ursprünglichen Oberfläche der Beschichtungsmasse ausgerichtet sein. Dabei kann der Boden vorzugsweise zum Auflagebereich hin ansteigend ausgebildet sein.

Der Boden des Eintauchbereichs kann ein positives oder ein negatives Relief oder dergleichen aufweisen. Damit kann jede gewünschte Ausgestaltung der Oberfläche der ausgehärteten Beschichtung realisiert werden. Auch können auf diese Weise beispielsweise Namen oder Logos in die Beschichtung eingebracht werden und in der fertigen Backware in der ausgehärteten Beschichtung dargestellt werden.

Dabei kann die Form in dem seitlich zu dem nicht zu beschichtenden zweiten Teilbereich des Gebäckteils liegenden Bereich Seitenwände aufweisen, deren vertikale Ausrichtung der Form des Gebäckteils entspricht, wobei die Seitenwände in der Eintauchposition des Gebäckteils den nicht zu beschichtenden zweiten Teilbereich der Seitenfläche(n) des Gebäckteils, insbesondere dichtend, von der Beschichtungsmasse abschirmen. Auf jeder Seite des Gebäckteils ist eine Seitenwand vorgesehen. Diese dient auch zur Ausrichtung und/oder Fixierung des Gebäckteils.

Der Auflagebereich ist vorzugsweise auf der der Beschichtungsmasse zugewandten Seite in einem Winkel β, der zwischen 50° und 90°, vorzugweise bei 62°, liegt, zu der ursprünglichen Oberfläche des Bades ausgerichtet. Der Auflagebereich ist auf seiner der Beschichtungsmasse abgewandten Seite in einem Winkel γ von ca. 90° zu der ursprünglichen Oberfläche "D" des Bades ausgerichtet. Alternativ kann der Winkel im Bereich 0<γ<(180°-β) liegen.
Nach dem Auflegen des Gebäckteils kann die insoweit befüllte Form gerüttelt werden. Dabei sinkt das Gebäckteil in die Beschichtungsmasse teilweise ein.
Nach Abschluss des Absinkens kann die Form abgekühlt werden. Hierdurch härtet die Beschichtungsmasse aus, und es bildet sich eine Beschichtung. Die Backware kann jetzt aus der Form entnommen werden. Hierzu kann die Form beispielsweise gewendet und - sofern die Form hinreichend flexibel ist - getwistet werden, um eine Herausnahme zu erleichtern.

Das Gebäckteil weist eine Längserstreckung auf, wobei hierunter insbesondere die Erstreckung des Gebäckteils verstanden wird, die orthogonal zum generellen Verlauf des nach dem Beschichten gebildeten generellen Übergangs vom unbeschichteten zweiten Teilbereich zum beschichteten ersten Teilbereich ausgerichtet ist. Ansonsten ist diejenige Erstreckung des Gebäckteils gemeint, welche sich zwischen dem Ende, das beschichtet wird, und dem Ende, welches einen unbeschichtet verbleibenden Bereich aufweist, verläuft und ggf. parallel zu zumindest einer annähernd derart verlaufenden Seitenkante des Gebäckteils ausgerichtet ist.

Dabei wird ein Endbereich dieser Längserstreckung mit der Beschichtung versehen. Das Gebäckteil weist ferner eine Breite auf, die orthogonal zur Längserstreckung verläuft.

Es sind Backwaren bekannt, die durch eine im Wesentlichen senkrechte Eintauchbewegung in ein Bad allseitig mit Ausnahme eines Griffbereichs beschichtet sind. Nachteilig hierbei ist, dass nach dem Herausziehen aus dem Bad die Beschichtung bis zu dem Zeitpunkt, an dem sie zumindest an der Oberfläche ausgehärtet ist, nachtropfen kann. Sofern die Backware ein Oberflächenrelief aufweisen soll, muss dieses in das Gebäckteil eingebracht werden. Aufgrund des Eintauchens in die Beschichtungsmasse können Konturen des in das Gebäckteil eingebrachten Oberflächenreliefs unscharf werden.

Aufgabe der Erfindung ist es, die vorgenannten Nachteile zu vermeiden und eine Backware anzugeben, bei der die Unterseite des Gebäckteils nur in einem ersten Teilbereich, der sich über die komplette Breite erstreckt, beschichtet ist.

Diese Aufgabe wird dadurch gelöst, dass ein erster Teilbereich der Unterseite des Gebäckteils mit einer über die gesamte Breite, jedoch nur über einen Teil der Längserstreckung reichenden Beschichtung versehen ist, und ein zweiter Teilbereich der Unterseite, der insbesondere über die gesamte Breite, jedoch nur über einen Teil der Längserstreckung reicht, als Griffbereich unbeschichtet ist, wobei die Oberseite des Gebäckteils ebenfalls zumindest in dem Griffbereich unbeschichtet ist.

Die Unterseite der Backware ist nur in einem ersten Teilbereich, der sich über die komplette Breite des Gebäckteils erstreckt, beschichtet. Ferner weist das Gebäckteil einen Griffbereich auf, der sowohl auf der Unterseite als auch auf der Oberseite unbeschichtet ist, so dass daran die Backware mit zwei Fingern ergriffen werden kann, ohne dass die Finger mit der Beschichtung in Kontakt kommen. Bei einer Beschichtung, die sich nur auf dem Teilbereich einer der beiden Oberflächen, beispielsweise der Unterseite befindet, kann die Backware auf jedem Untergrund, beispielsweise auch auf einer Tischdecke, auf ihrer unbeschichteten Oberfläche abgelegt werden, so dass die Beschichtung nicht an dem Untergrund haften bleibt.
Der Übergang zwischen dem unbeschichteten zweiten Teilbereich und dem beschichteten ersten Teilbereich kann beliebig ausgebildet und positioniert werden. Sofern bei einem rechteckigen Gebäckteil ein ebenfalls rechteckiger und die gesamte Breite überdeckender Griffbereich beabsichtigt ist, kann der Übergang parallel zu zumindest einer Seitenfläche des Gebäckteils verlaufen. Sofern nur eine Ecke des viereckigen Gebäckteils einen Griffbereich bilden soll, kann der Übergang in einem Winkel ungleich 90° zu den vier Seitenflächen des Gebäckteils verlaufen. Alternativ sind aber auch gekrümmte, geschwungene oder beliebig geformte Übergänge möglich.

Bei der Unterseite des Gebäckteils muss es sich nicht um die Unterseite der später hergestellten Backware handeln. Vielmehr kann es sich bei der während des Herstellverfahrens als Unterseite bezeichneten Oberfläche auch um die spätere Oberseite der fertig hergestellten Backware handeln. Die in der Form befindliche Beschichtungsmasse stellt in ihrer Gesamtheit die später ausgehärtete Beschichtung der Backware dar.

Die Unterseite besteht vorzugsweise nur aus dem ersten Teilbereich und dem zweiten als Griffbereich ausgebildeten Teilbereich. Bei dem Gebäckteil kann es sich beispielsweise um einen Butterkeks handeln. Selbstverständlich sind auch andere geeignete Gebäckteile möglich. Als Beschichtung bietet sich beispielsweise Vollmilchschokolade oder Zartbitterschokolade an. Selbstverständlich sind auch andere geeignete Beschichtungen denkbar.

Das Gebäckteil kann viereckig, insbesondere rechteckig, ausgebildet sein. Bei einer rechteckigen Ausgestaltung des Gebäckteils kann der beschichtete erste Teilbereich ebenfalls rechteckig ausgebildet sein und kann bis an insgesamt drei die Unterseite begrenzende Seitenflächen heranreichen. Alternativ sind auch beliebige andere geometrische oder figürliche Formen des Gebäckteils und der Beschichtung möglich.

Das Gebäckteil kann beispielsweise eine Länge von etwa 6 cm, eine Breite von etwa 5 cm und eine Höhe von etwa 0,5 cm aufweisen, wobei die Beschichtung etwa 0,3 cm betragen kann. Es bietet sich an, wenn der Griffbereich etwa 1 bis 2 cm tief und/oder breit ist, damit die Backware gut mit zwei Fingern gegriffen werden kann, ohne dass die Finger in Kontakt mit der Beschichtung kommen.

Das Gebäckteil ist auch in zumindest einem derjenigen Bereiche der Seitenfläche(n), die an den zu beschichtenden ersten Teilbereich angrenzen, mit einer Beschichtung versehen. Bei einer rechteckigen Ausgestaltung des Gebäckteils und bei einem Übergang zwischen dem unbeschichteten zweiten Teilbereich und dem beschichteten ersten Teilbereich, der parallel zu zwei Seitenflächen des Gebäckteils ausgerichtet ist, erstreckt sich damit die Beschichtung über insgesamt drei aneinander angrenzende Seitenflächen. Dabei wäre die mittlere der drei Seitenflächen über ihre komplette Länge und die beiden anderen, einander gegenüberliegenden Seitenflächen nur über einen Teil ihrer jeweiligen Länge beschichtet. In der Draufsicht auf die Backware würde die Beschichtung das Gebäckteil nach Art eines "U" teilweise umfassen. An den beiden gegenüberliegenden Seitenflächen kann die Höhe der Beschichtung mit zunehmendem Abstand von der mittleren Seitenfläche abnehmen.

Die Beschichtung kann in etwa bündig mit der jeweils entsprechenden Kante zwischen zumindest einer Seitenfläche und der Oberseite des Gebäckteils abschließen. Sofern das Gebäckteil rechteckig ausgebildet ist und der Übergang zwischen dem unbeschichteten zweiten Teilbereich und dem beschichteten ersten Teilbereich parallel zu zwei Seitenflächen des Gebäckteils ausgerichtet ist, ist eine Seitenfläche komplett beschichtet, während die Höhe der Beschichtung an den beiden angrenzenden, einander gegenüberliegend angeordneten Seitenflächen mit zunehmendem Abstand von der vollständig beschichteten Seitenfläche abnimmt.

Die Dicke der Beschichtung kann zumindest entlang eines Teilbereichs der Längserstreckung des ersten Teilbereichs von dem freien Ende des ersten Teilbereichs zu dem Griffbereich zunehmen. Die Dicke der Beschichtung kann zumindest entlang eines Teilbereichs der Längserstreckung des ersten Teilbereichs von dem freien Ende des ersten Teilbereichs zu dem Griffbereich abnehmen.
Alternativ kann die Dicke der Beschichtung zumindest entlang eines Teilbereichs der Längserstreckung des ersten Teilbereichs konstant sein.
Die Beschichtung kann ein positives oder ein negatives Relief oder dergleichen aufweisen. Damit ist jede gewünschte Ausgestaltung der Oberfläche der ausgehärteten Beschichtung realisierbar. Auch sind auf diese Weise beispielsweise Namen oder Logos in die Beschichtung einbringbar und damit in der fertigen Backware in der ausgehärteten Beschichtung darstellbar.
Im Folgenden werden in den Zeichnungen dargestellte Ausführungsbeispiele der Erfindung erläutert. Es zeigen:
- Fig. 1a-f: ein erstes Ausführungsbeispiel einer Form zur Durchführung des erfindungsgemäßen Verfahrens und eine damit hergestellte Backware,
- Fig. 2: einen Schnitt durch ein weiteres Ausführungsbeispiel einer Form zur Durchführung des erfindungsgemäßen Verfahrens und eine damit hergestellte Backware,
- Fig. 3a: einen Schnitt durch ein weiteres Ausführungsbeispiel einer mit Beschichtungsmasse befüllten Form zur Durchführung des erfindungsgemäßen Verfahrens,
- Fig. 3b: einen Schnitt durch das Ausführungsbeispiel gemäß Fig. 3a mit einer damit hergestellte Backware,
- Fig. 4: eine Seitenansicht der Backware gemäß Fig. 2 und
- Fig. 5a-f: ein weiteres Ausführungsbeispiel einer Form zur Durchführung des erfindungsgemäßen Verfahrens und eine damit hergestellte Backware.
In allen Figuren werden für gleiche bzw. gleichartige Elemente übereinstimmende Bezugszeichen verwendet.
Bei den Fig. 1a und 5a handelt es sich jeweils um Seitenansichten einer erfindungsgemäßen Backware. Die Fig. 1b und 5b stellen Schnitte durch die in den Figuren 1c bzw. 5c dargestellten Gegenstände dar.

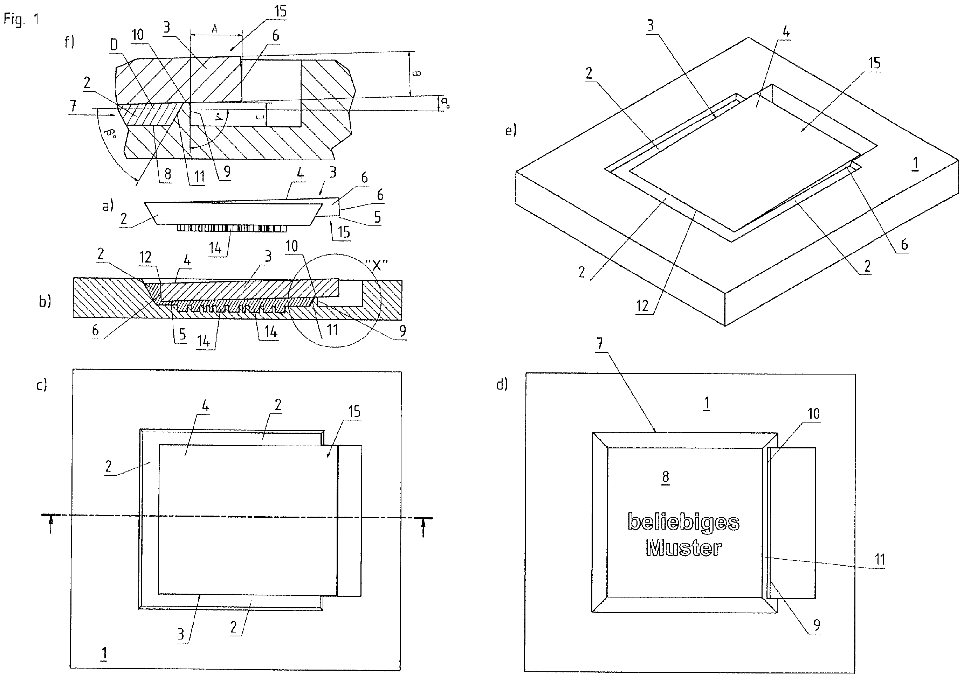

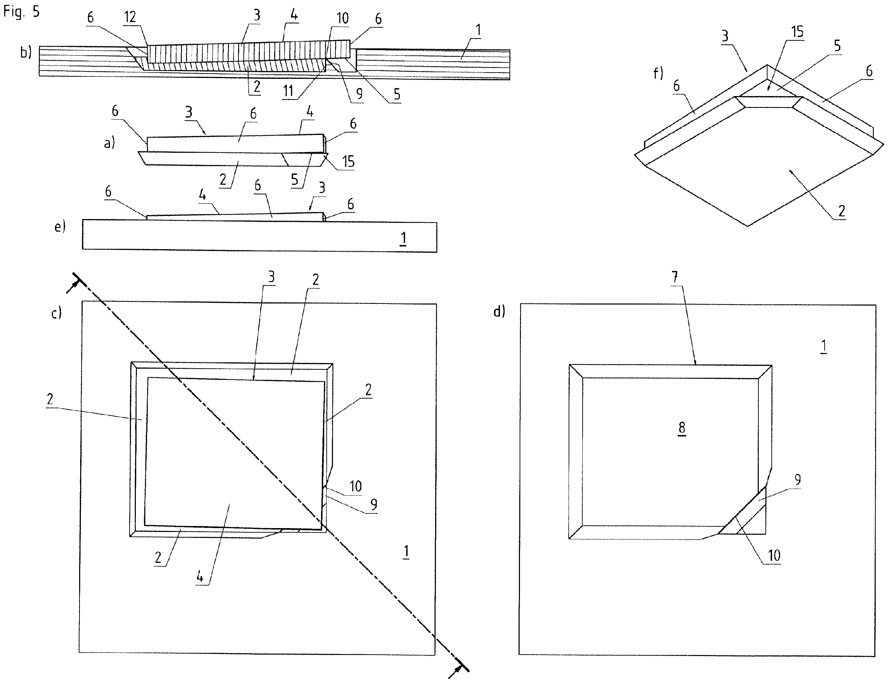

In den Fig. 1c und 1d sowie 5c und 5d ist die jeweilige Form 1 dargestellt, wobei in den Fig. 1c und 5c die jeweilige Form 1 mit einer darin befindlichen Beschichtungsmasse 2 sowie einem Gebäckteil 3 dargestellt ist, während die Fig. 1d und 5d nur die jeweilige Form 1 für sich zeigen.
Fig. 1e zeigt eine schräge Draufsicht auf den Gegenstand nach Fig. 1c, während Fig. 1f das Detail "X" aus Fig. 1b zeigt. Fig. 5e stellt eine Seitenansicht von Fig. 5c dar, während es sich bei Fig. 5f um eine schräge Draufsicht auf die Backware handelt.

Das zu beschichtende Gebäckteil 3 weist eine Oberseite 4, eine Unterseite 5 sowie - sofern das Gebäckteil 3 wie in den Ausführungsbeispielen gezeigt viereckig ausgebildet ist - vier Seitenflächen 6 auf.

Wie den Figuren zu entnehmen ist, weisen die darin dargestellten Formen 1 einen Eintauchbereich 7 mit einem Boden 8 auf. In den Eintauchbereich 7 ist die noch nicht ausgehärtete Beschichtungsmasse 2 eingefüllt, die nach dem Aushärten die Beschichtung bildet. Die Form 1 weist ferner noch einen Auflagebereich 9 auf, der beispielsweise bei dem Ausführungsbeispiel nach Fig. 1b als Steg ausgebildet ist.

Das Gebäckteil 3 liegt auf dem Auflagebereich 9 auf. Durch den Auflagebereich 9 wird der nicht zu beschichtende zweite Teilbereich des Gebäckteils 3, insbesondere dichtend, von der Beschichtungsmasse 2 abgeschirmt. In Fig. 1 ist der Eintauchbereich 7 breiter als der Auflagebereich 9. Ab dem Auflagebereich 9 ist die Form 1 enger ausgebildet und auf die Breite des Gebäckteils 3 abgestimmt, so dass seitlich der nicht zu beschichtende zweite Teilbereich des Gebäckteils 3, insbesondere dichtend, von der Beschichtungsmasse 2 abgeschirmt ist.

Der Auflagebereich 9 ist als über die gesamte Breite der Form 1 verlaufender und sich wenigstens ungefähr vertikal aufwärts erstreckender Steg ausgebildet. Der der Beschichtungsmasse 2 zugewandte Wandbereich 11 sowie die der Beschichtungsmasse 2 zugewandte Kante 10 des Auflagebereiches 9 ist in den dargestellten Ausführungsbeispielen gradlinig ausgebildet, so dass der spätere Verlauf des Übergangs auf der Unterseite 5 des Gebäckteils 3 von dem unbeschichteten Bereich zu dem beschichteten Bereich ebenfalls gerade ausgebildet ist, so wie es beispielsweise in Fig. 1d zu erkennen ist.

Der Verlauf des Auflagebereichs 9 im Bereich der der Beschichtungsmasse 2 zugewandten Kante 10 kann aber auch beispielsweise wellenförmig ausgebildet sein, so dass sich dann ein entsprechend anderer Verlauf des Überganges auf der Unterseite 5 des Gebäckteils 3 von dem unbeschichteten Bereich zu dem beschichteten Bereich ergibt.

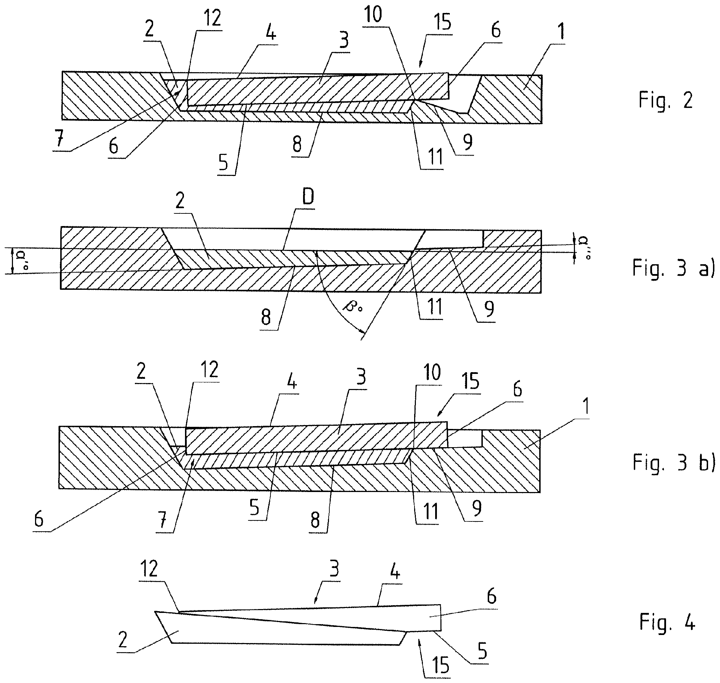

In den Fig. 3a und 3b ist der Auflagebereich 9 als flächige und sich über das freie Ende des Gebäckteils 3 hinauserstreckende Auflagefläche ausgebildet. Der Auflagebereich 9 ist gegenüber der ursprünglichen Oberfläche der Beschichtungsmasse 2, d. h. vor dem Auflegen des Gebäckteils 3, in einem Winkel α" von etwa 2° ausgerichtet.

Beispielsweise in Fig. 2 ist der Boden 8 des Eintauchbereichs 7 horizontal ausgerichtet, während Fig. 3 ein Ausführungsbeispiel zeigt, bei dem der Boden 8 in einem Winkel α' von 2° zur ursprünglichen Oberfläche der Beschichtungsmasse 2, d. h. vor dem Eintauchen des Gebäckteils 3, ausgerichtet ist. Der Winkel α' kann auch abweichend sein und damit die Schichtdicke der Beschichtungsmasse und deren Geometrie beeinflussen.

Bei dem Ausführungsbeispiel nach Fig. 1 weist der Boden 8 des Eintauchbereichs 7 ein Relief 14 in Form zweier Wörter auf. Der Auflagebereich 9 ist auf seiner der Beschichtungsmasse 2 zugewandten Seite in einem Winkel β von etwa 62° zu der ursprünglichen Oberfläche "D" des Bades, die in Fig. 1f als gestrichelte Linie dargestellt ist, ausgerichtet. Der Auflagebereich ist auf seiner der Beschichtungsmasse 2 abgewandten Seite in einem Winkel γ von ca. 90° zu der ursprünglichen Oberfläche "D" des Bades ausgerichtet. Alternativ kann der Winkel im Bereich 0<γ<(180°-β) liegen.

In dem in Fig. 2 dargestellten Ausführungsbeispiel ist der Boden 8 der Form 1 parallel zu der ursprünglichen Oberfläche des Bades ausgerichtet.

Zur Beschichtung wird das Gebäckteil 3 von oben auf die noch nicht ausgehärtete Beschichtungsmasse 2 aufgelegt. Bei in Kontakt kommen des zu beschichtenden ersten Teilbereichs der Unterseite 5 des Gebäckteils 3 mit der Oberfläche der Beschichtungsmasse 2 sinkt das Gebäckteil 3 in diesem Teilbereich aufgrund seines Gewichtes leicht in die Beschichtungsmasse 2 ein. Auch kann ein gezieltes Eindrücken erfolgen. Dadurch steigt der Spiegel der Beschichtungsmasse 2 infolge der Verdrängung der Beschichtungsmasse 2 durch das einsinkende Gebäckteil 3 in der Form 1 an, so dass der zu beschichtende erste Teilbereich beschichtet wird.

Nach dem Auflegen des Gebäckteils 3 kann die insoweit befüllte Form gerüttelt werden. Dabei sinkt das Gebäckteil 3 in die Beschichtungsmasse 2 teilweise ein.

Nach Abschluss des Absinkens kann die Form 1 abgekühlt werden. Hierdurch härtet die Beschichtungsmasse 2 aus, und es bildet sich eine Beschichtung. Die Backware kann jetzt aus der Form 1 entnommen werden. Hierzu kann die Form 1 beispielsweise gewendet und - sofern die Form 1 hinreichend flexibel ist - getwistet werden, um eine Herausnahme zu erleichtern.

Der unbeschichtete zweite Teilbereich der Unterseite 5 wird während der Beschichtung durch den Auflagebereich 9 von der Beschichtungsmasse 2 abgeschirmt. Dadurch erfolgt nur eine Beschichtung der Unterseite 5 in dem ersten Teilbereich. Der unbeschichtete zweite Teilbereich der Unterseite 5 bildet nach dem Beschichten zusammen mit der Oberseite 4 einen Griffbereich 15.

Da der Eintauchbereich 7 - so wie es in den Figuren dargestellt ist - breiter als das Gebäckteil 3 ist, befindet sich bei den Ausführungsbeispielen nach den Fig. 1 bis 4 im Bereich dreier Seitenflächen 6 die Beschichtungsmasse 2.

Bei dem in Fig. 5 dargestellten Ausführungsbeispiel ist der unbeschichtete zweite Teilbereich und damit auch der dadurch gebildete Griffbereich 15 dreieckig ausgebildet.

Bei den Ausführungsformen nach den Fig. 1 und 2 ist die Höhe der Beschichtungsmasse 2 in der Form 1 so eingestellt, dass die Beschichtungsmasse 2 in dem Bereich des Gebäckteils 3, der beim Eintauchen am tiefsten eintaucht, in etwa bündig mit der Kante 12 zwischen der Seitenfläche 6 und der Oberseite 4 des Gebäckteils 3 abschließt. Die drei Seitenflächen 6, die an den zu beschichtenden ersten Teilbereich der Unterseite 5 angrenzen, sind ebenfalls zumindest teilweise beschichtet, so dass in der Draufsicht die Backware von der Beschichtung nach Art eines "U" umfasst wird.

Bei dem in Fig. 2 dargestellten Ausführungsbeispiel nimmt die Dicke der Beschichtung von dem freien Ende des ersten Teilbereichs zu dem Griffbereich 15 zu. Die Dicke der Beschichtung kann aber selbstverständlich auch über den ersten Teilbereich konstant sein, so wie es in Fig. 3b dargestellt ist.

Wie beispielsweise Fig. 1b zu entnehmen ist, ist die Seitenfläche 6, die am tiefsten eingetaucht ist, vollständig beschichtet. Die Beschichtung erstreckt sich an den beiden angrenzenden, einander gegenüberliegenden Seitenflächen 6, so wie in Fig. 1a dargestellt, zum einen nicht über die ganze Länge der jeweiligen Seitenfläche 6. Zum anderen nimmt die Höhe der Beschichtung mit zunehmendem Abstand von der vollständig beschichteten "mittleren" Seitenfläche 6 ab.

Sofern der Boden 8 des Eintauchbereichs 7 ein Relief 14 aufweist, kann jedes beliebige Muster oder jeder beliebige Name - so wie es in Fig. 1d angedeutet ist - in die Beschichtung eingebracht werden, obwohl die Oberflächen des Gebäckteils 3 selbst im Wesentlichen plan sind.

Das in Fig. 1 dargestellte Gebäckteil 3 kann eine Länge von etwa 6 cm, eine Breite von etwa 5 cm und eine Höhe "B" von etwa 0,5 cm aufweisen, wobei die aufzubringende Beschichtung etwa 0,3 cm beträgt. Bei diesen Abmessungen bietet sich an, wenn der Abstand "A", der die Breite des späteren Griffbereichs 15 bestimmt, etwa 1 bis 2 cm beträgt sowie der Winkel α zwischen der Unterseite 5 des Gebäckteils 3 und der ursprünglichen Oberfläche der Beschichtungsmasse 2 etwa 2° beträgt und der Winkel β zwischen der ursprünglichen Oberfläche der Beschichtungsmasse 2 und der der Beschichtungsmasse 2 zugewandten Seite des Auflagebereichs 9 etwa 62 ° beträgt. Die Höhe "C" des Auflagebereiches 9 ist vorzugsweise mit etwa 0,3 cm eingestellt.

## Patentansprüche

1. Verfahren zur Herstellung einer Backware, die ein Gebäckteil (3) mit zumindest einer Unterseite (5), die durch zumindest eine Oberfläche gebildet ist, mit einer Oberseite (4), die durch zumindest eine Oberfläche gebildet ist, und mit zumindest einer die Oberseite (4) und die Unterseite (5) miteinander verbindenden Seitenfläche (6) umfasst, wobei ein Teilbereich der Unterseite (5) des Gebäckteils (3) mit einer Beschichtung versehen wird, wobei ein über die gesamte Breite, jedoch nur über einen Teil der Längserstreckung reichender erster Teilbereich der Unterseite (5) beschichtet wird und ein insbesondere über die gesamte Breite, jedoch nur über einen Teil der Längserstreckung reichender zweiter Teilbereich der Unterseite (5) als Griffbereich (15) unbeschichtet verbleibt, wobei zum Beschichten eine Form (1) eingesetzt wird, in der ein Bad aus noch nicht ausgehärteter Beschichtungsmasse (2) vorgesehen ist, wobei das Gebäckteil (3) mit dem zu beschichtenden Teilbereich der teilweise zu beschichtenden Unterseite (5) in die noch nicht ausgehärtete Beschichtungsmasse (2) eingetaucht wird und anschließend die Beschichtungsmasse (2), insbesondere durch Abkühlen, aushärtet und so die Beschichtung bildet, **dadurch gekennzeichnet, dass** die zu beschichtende Unterseite des Gebäckteils (3) in einem Winkel α zwischen 1° und 20° gegenüber der ursprünglichen Oberfläche des Bades der noch nicht ausgehärteten Beschichtungsmasse zumindest während des Aushärtens der noch nicht ausgehärteten Beschichtungsmasse (2) ausgerichtet ist und dass die Form (1) einen die noch nicht ausgehärtete Beschichtungsmasse (2) aufnehmenden Eintauchbereich (7) mit einem Boden (8) und einem Auflagebereich (9) aufweist, wobei das Gebäckteil (3) auf dem Auflagebereich (9) aufliegt und durch den Auflagebereich (9) der nicht zu beschichtende zweite Teilbereich des Gebäckteils (3), insbesondere dichtend, von der Beschichtungsmasse (2) abgeschirmt wird.

2. Verfahren nach dem vorhergehenden Anspruch, **dadurch gekennzeichnet, dass** der Winkel α zwischen 1° und 5°, vorzugsweise bei 2°, liegt.

3. Verfahren nach einem der vorhergehenden Ansprüche, **dadurch gekennzeichnet, dass** das Gebäckteil (3) viereckig, insbesondere rechteckig, ausgebildet ist.

4. Verfahren nach einem der vorhergehenden Ansprüche, **dadurch gekennzeichnet, dass** die Dicke der Beschichtung zumindest entlang eines Teilbereichs der Längserstreckung des ersten Teilbereichs von dem freien Ende des ersten Teilbereichs zu dem Griffbereich (15) zunimmt und/oder dass die Dicke der Beschichtung zumindest entlang eines Teilbereichs der Längserstreckung des ersten Teilbereichs von dem freien Ende des ersten Teilbereichs zu dem Griffbereich (15) abnimmt.

5. Verfahren nach einem der Ansprüche 1 bis 4, **dadurch gekennzeichnet, dass** die Dicke der Beschichtung zumindest entlang eines Teilbereichs der Längserstreckung des ersten Teilbereichs konstant ist.

6. Verfahren nach einem der vorhergehenden Ansprüche, **dadurch gekennzeichnet, dass** die Höhe der Beschichtungsmasse (2) in der Form derart ausgebildet ist, dass das Gebäckteil (3) durch das Eintauchen in die noch nicht ausgehärtete Beschichtungsmasse (2) auch in zumindest einem derjenigen Bereiche von zumindest einer der Seitenflächen (6), die an den zu beschichtenden ersten Teilbereich angrenzen, mit einer Beschichtung versehen wird.

7. Verfahren nach einem der vorhergehenden Ansprüche, **dadurch gekennzeichnet, dass** das Gebäckteil (3) so weit in die noch nicht ausgehärtete Beschichtungsmasse (2) eingetaucht wird, dass die Beschichtungsmasse (2) bei eingetauchtem Gebäckteil (3) in dem Bereich des Gebäckteils (3), der beim Eintauchen am tiefsten eintaucht, in etwa bündig mit der entsprechenden Kante (12) zwischen der Seitenfläche (6) und der Oberseite (4) des Gebäckteils (3) abschließt.

8. Verfahren nach einem der vorhergehenden Ansprüche, **dadurch gekennzeichnet, dass** das Gebäckteil (3) so weit in die noch nicht ausgehärtete Beschichtungsmasse (2) eingetaucht wird, dass die Beschichtung auch teilweise die Oberseite (4) des Gebäckteils (3) überdeckt.

9. Verfahren nach einem der vorhergehenden Ansprüche, **dadurch gekennzeichnet, dass** der Auflagebereich (9) als über die gesamte Breite der Form (1) verlaufender und sich wenigstens ungefähr vertikal aufwärts erstreckender Steg ausgebildet ist.

10. Verfahren nach einem der vorhergehenden Ansprüche, **dadurch gekennzeichnet, dass** der Auflagebereich (9) als flächige und insbesondere sich über das freie Ende des Gebäckteils (3) hinauserstreckende Auflagefläche ausgebildet ist.

11. Verfahren nach einem der vorhergehenden Ansprüche, **dadurch gekennzeichnet, dass** die Oberfläche des Auflagebereichs (9) in einem Winkel α", der zwischen 1° und 20°, vorzugsweise 2°, beträgt, zur ursprünglichen Oberfläche der Beschichtungsmasse (2) ausgerichtet ist.

12. Verfahren nach einem der vorhergehenden Ansprüche, **dadurch gekennzeichnet, dass** der Boden (8) des Eintauchbereichs (7) in einem Winkel α', der zwischen 0° und 20°, vorzugsweise 2°, beträgt, zur Oberfläche der Beschichtungsmasse (2) ausgerichtet ist.

13. Verfahren nach einem der vorhergehenden Ansprüche, **dadurch gekennzeichnet, dass** der Boden (8) des Eintauchbereichs (7) ein Relief (14) oder dergleichen aufweist.

14. Verfahren nach einem der vorhergehenden Ansprüche 1 bis 13, **dadurch gekennzeichnet, dass** die Form (1) in dem seitlich zu dem nicht zu beschichtenden zweiten Teilbereich des Gebäckteils (3) liegenden Bereich entweder Seitenwände aufweist, deren wenigstens ungefähr vertikale Ausrichtung der Form des Gebäckteils (3) entspricht, wobei die Seitenwände in der Eintauchposition des Gebäckteils (3) den nicht zu beschichtenden zweiten Teilbereich der Seitenfläche(n) des Gebäckteils (3), insbesondere dichtend, von der Beschichtungsmasse abschirmen oder aber zumindest zwei im Abstand zueinander angeordnete Fixierelemente aufweist, welche das Gebäckteil seitlich beim Eintauchen fixieren.

15. Verfahren nach einem der vorhergehenden Ansprüche, **dadurch gekennzeichnet, dass** der Auflagebereich (9) auf der der Beschichtungsmasse (2) zugewandten Seite in einem Winkel β, der zwischen 50° und 90°, vorzugweise bei 62°, liegt, zu der ursprünglichen Oberfläche des Bades ausgerichtet ist.

## Claims

1. Method for preparing a bakery product, comprising a baked part (3) with at least one under side (5) which is formed by at least one surface, with an upper side (4) which is formed by at least one surface, and with at least one side surface (6) connecting the upper side (4) and the lower side (5) to one another, wherein a part area of the under side (5) of the baked part (3) is provided with a coating, wherein a first part area of the under side (5), extending over the entire width but only over a part of the longitudinal extension, is coated, and a second part area of the under side (5), extending over the entire width but only over a part of the longitudinal extension, remains uncoated as a touch area (15), wherein a mould (1) is used for the coating, provided in which is a bath of not yet hardened coating compound (2), wherein the baked part (3) is immersed, with the part area to be coated of the under side (5) which is to be partially coated, into the not yet hardened coating compound (2), and the coating compound (2) then hardens, in particular by cooling, and thereby forms the coating, **characterised in that** the under side to be coated of the baked part (3) is aligned at an angle α of between 1° and 20° in relation to the original surface of the bath of the not yet hardened coating compound at least during the hardening of the not yet hardened coating compound (2), and that the mould (1) comprises the immersion area (7) containing the not yet hardened coating compound (2), with a base (8) and a resting area (9), wherein the baked part (3) lies on the resting area (9) and, by means of the resting area (9), the second part area, not to be coated, of the baked part (3) is shielded from the coating compound (2), in particular in a sealing manner.

2. Method according to the preceding claim, **characterised in that** the angle α lies between 1° and 5°, preferably at 2°.

3. Method according to any one of the preceding claims, **characterised in that** the baked part (3) is rectangular, in particular right-angled rectangular.

4. Method according to any one of the preceding claims, **characterised in that** the thickness of the coating at least along a part area of the longitudinal extension of the first part area increases from the free end of the first part area to the contact area (15) and/or that the thickness of the coating at least along a part area of the longitudinal extension of the first part area decreases from the free end of the first part area to the contact area (15).

5. Method according to any one of claims 1 to 4, **characterised in that** the thickness of the coating is constant at least along a part area of the longitudinal extension of the first part area.

6. Method according to any one of the preceding claims, **characterised in that** the height of the coating compound (2) in the mould is configured in such a way that the baked part (3), due to the immersion into the not yet hardened coating compound (2) is provided with a coating also in at least one of those areas of at least one of the side surfaces (6) which border on the first part area which is to be coated.

7. Method according to any one of the preceding claims, **characterised in that** the baked part (3) is immersed into the not yet hardened coating compound (2) sufficiently far such that the coating compound (2), with the baked part (3) immersed, in the area of the baked part (3) which on immersion is the most deeply immersed, is closed off approximately flush with the corresponding edge (12) between the side surface (6) and the upper side (4) of the baked part (3).

8. Method according to any one of the preceding claims, **characterised in that** the baked part (3) is immersed into the not yet hardened coating compound (2) sufficiently far such that the coating also partially covers the upper side (4) of the baked part (3).

9. Method according to any one of the preceding claims, **characterised in that** the resting area (9) is configured as running over the entire width of the mould (1) and as a web extending at least approximately vertically upwards.

10. Method according to any one of the preceding claims, **characterised in that** the resting area (9) is configured as flat, and in particular as a resting surface extending out over the free end of the baked part (3).

11. Method according to any one of the preceding claims, **characterised in that** the surface of the resting area (9) is aligned at an angle α", which amounts to between 1° and 20°, preferably 2°, to the original surface of the coating compound (2).

12. Method according to any one of the preceding claims, **characterised in that** the base (8) of the immersion area (7) is aligned at an angle α', which amounts to between 0° and 20°, preferably 2°, to the surface of the coating compound (2).

13. Method according to any one of the preceding claims, **characterised in that** the base (8) of the immersion area (7) exhibits a relief (14) or similar configuration.

14. Method according to any one of the preceding claims 1 to 13, **characterised in that** the mould (1) comprises, in the area lying laterally to the second part area, not to be coated, of the baked part (3), either side walls, of which the at least approximately vertical alignment corresponds to the shape of the baked part (3), wherein the side walls, in the immersion position of the baked part (3), shield the second part area, not to be coated, of the side surface(s) of the baked part (3), from the coating compound, in particular in a sealing manner, or comprises at least two fixed elements arranged at a distance from one another, which fix the baked part laterally when it is immersed.

15. Method according to any one of the preceding claims, **characterised in that** the resting area (9) is aligned, on the side facing the coating compound (2), at an angle β, which lies between 50° and 90°, preferably at 62°, to the original surface of the bath.

## Revendications

1. Procédé de fabrication d'un produit de boulangerie incluant un biscuit (3) qui comprend au moins une face inférieure (5) formée par au moins une surface, une face supérieure (4) formée par au moins une surface, et au moins une face latérale (6) reliant mutuellement ladite face supérieure (4) et ladite face inférieure (5), une région partielle de la face inférieure (5) dudit biscuit (3) étant munie d'un nappage, sachant qu'une première région partielle de la face inférieure (5), couvrant l'intégralité de la largeur, mais toutefois seulement une partie de l'étendue longitudinale, est pourvue d'un nappage, et qu'une seconde région partielle de ladite face inférieure (5), couvrant en particulier la totalité de la largeur, mais néanmoins uniquement une partie de l'étendue longitudinale, demeure exempte de nappage en tant que zone de préhension (15), sachant qu'un moule (1), utilisé en vue du nappage, renferme un bain de masse de nappage (2) non encore durcie, ledit biscuit (3) étant alors plongé dans ladite masse de nappage (2), non encore durcie, par la région partielle vouée au nappage sur la face inférieure (5) devant être partiellement nappée, et ladite masse de nappage (2) étant ensuite durcie, notamment par refroidissement, en formant ainsi le nappage, **caractérisé par le fait que** la face inférieure du biscuit (3), vouée au nappage, est orientée suivant un angle α compris entre 1° et 20° par rapport à la surface initiale du bain de la masse de nappage non encore durcie, au moins au cours du durcissement de ladite masse de nappage (2) non encore durcie ; et **par le fait que** le moule (1) présente une zone d'immersion (7) qui, recevant ladite masse de nappage (2) non encore durcie, comporte un fond (8) et une zone d'appui (9), sachant que le biscuit (3) repose sur ladite zone d'appui (9) et est isolé vis-à-vis de ladite masse de nappage (2), notamment avec effet d'étanchement, par la zone d'appui (9) de la seconde région partielle dudit biscuit (3) qui n'est pas destinée à être nappée.

2. Procédé selon la revendication précédente, **caractérisé par le fait que** l'angle α mesure entre 1° et 5°, et est préférentiellement de l'ordre de 2°.

3. Procédé selon l'une des revendications précédentes, **caractérisé par le fait que** le biscuit (3) est de configuration quadrangulaire, notamment rectangulaire.

4. Procédé selon l'une des revendications précédentes, **caractérisé par le fait que** l'épaisseur du nappage croît, au moins le long d'une zone partielle de l'étendue longitudinale de la première région partielle, depuis l'extrémité libre de ladite première région partielle jusqu'à la zone de préhension (15) ; et/ou **par le fait que** l'épaisseur dudit nappage décroît, au moins le long d'une zone partielle de l'étendue longitudinale de ladite première région partielle, depuis l'extrémité libre de ladite première région partielle jusqu'à ladite zone de préhension (15).

5. Procédé selon l'une des revendications 1 à 4, **caractérisé par le fait que** l'épaisseur du nappage est constante au moins le long d'une zone partielle de l'étendue longitudinale de la première région partielle.

6. Procédé selon l'une des revendications précédentes, **caractérisé par le fait que** la hauteur de la masse de nappage (2), dans le moule, est conçue de façon telle que le biscuit (3) soit muni d'un nappage suite à l'immersion dans ladite masse de nappage (2) non encore durcie, également dans au moins l'une des régions d'au moins l'une des faces latérales (6) qui sont limitrophes de la première région partielle vouée au nappage.

7. Procédé selon l'une des revendications précédentes, **caractérisé par le fait que** le biscuit (3) est plongé dans la masse de nappage (2), non encore durcie, d'une profondeur telle qu'à l'état immergé dudit biscuit (3), ladite masse de nappage (2) vienne sensiblement à fleur de l'arête (12) correspondante, entre la face latérale (6) et la face supérieure (4) dudit biscuit (3), dans la région dudit biscuit (3) pénétrant le plus profondément lors de l'immersion.

8. Procédé selon l'une des revendications précédentes, **caractérisé par le fait que** le biscuit (3) est plongé dans la masse de nappage (2), non encore durcie, d'une profondeur telle que le nappage recouvre également, en partie, la face supérieure (4) dudit biscuit (3).

9. Procédé selon l'une des revendications précédentes, **caractérisé par le fait que** la zone d'appui (9) est réalisée sous la forme d'une membrure dont le tracé couvre toute la largeur du moule (1) et qui s'étend vers le haut, au moins approximativement dans le sens vertical.

10. Procédé selon l'une des revendications précédentes, **caractérisé par le fait que** la zone d'appui (9) est réalisée sous la forme d'une surface d'appui de configuration plane qui s'étend, en particulier, au-delà de l'extrémité libre du biscuit (3).

11. Procédé selon l'une des revendications précédentes, **caractérisé par le fait que** la surface de la zone d'appui (9) est orientée, par rapport à la surface initiale de la masse de nappage (2), suivant un angle α" compris entre 1° et 20°, et mesurant 2° de préférence.

12. Procédé selon l'une des revendications précédentes, **caractérisé par le fait que** le fond (8) de la zone d'immersion (7) est orienté, par rapport à la surface de la masse de nappage (2), suivant un angle α' compris entre 0° et 20°, et mesurant 2° de préférence.

13. Procédé selon l'une des revendications précédentes, **caractérisé par le fait que** le fond (8) de la zone d'immersion (7) présente un motif en relief (14), ou un profilage similaire.

14. Procédé selon l'une des revendications 1 à 13 précédentes, **caractérisé par le fait que**, dans la région occupant une position latérale par rapport à la seconde région partielle du biscuit (3) non destinée à être nappée, le moule (1) est pourvu de parois latérales dont l'orientation, au moins approximativement verticale, correspond à la forme du biscuit (3), sachant qu'à l'emplacement d'immersion dudit biscuit (3), lesdites parois latérales isolent vis-à-vis de la masse de nappage, notamment avec effet d'étanchement, la seconde région partielle de la (des) face(s) latérale(s) dudit biscuit (3) qui n'est pas destinée à être nappée ; ou bien est pourvu d'au moins deux éléments de blocage à demeure qui sont placés à distance l'un de l'autre et bloquent ledit biscuit à demeure, dans le sens latéral, lors de l'immersion.

15. Procédé selon l'une des revendications précédentes, **caractérisé par le fait que** zone d'appui (9) est orientée par rapport à la surface initiale du bain, du côté tourné vers la masse de nappage (2), suivant un angle β mesurant entre 50° et 90°, préférentiellement de l'ordre de 62°.
